# EUROPEAN PATENT SPECIFICATION

(11) **EP 0 961 745 B1**
(45) Date of publication and mention of the grant of the patent: **12.12.2001**
(21) Application number: 96929633.4
(22) Date of filing: 29.08.1996
(51) Int. Cl.: B65G 7/12, B66C 1/44

(54) **LIFTING AND CARRYING DEVICE**
HEBE-UND STÜTZVORRICHTUNG
DISPOSITIF PERMETTANT DE SOULEVER ET DE PORTER UNE CHARGE

(30) Priority: 30.08.1995 SE 9502992
(43) Date of publication of application: 08.12.1999
(73) Proprietor: Norrahammars Platslageri AB, 562 32 Norrahammar (SE)
(72) Inventor: SANBERG, Terje, S-562 31 Norrahammar (SE); SANDBERG, Stein, S-562 30 Norrahammar (SE)
(74) Representative: Arwidi, Bengt Dr.
(86) International application number: SE9601072
(87) International publication number: WO9708083

(56) References cited:
- DE-A- 1 756 613
- DE-B- 1 506 525
- DK-A- 259 889
- SE-B- 464 021
- US-A- 911 996
- DERWENT'S ABSTRACT, No. H-2926C/34, week H34; & SU,A,491 146 (VOROBEV D D), 9 January 1980.

## Description

The present invention is for a lifting and carrying device for gas bottles and the like which due to their shape and weight are difficult to lift and move without lifting equipment.
The invention is primarily intended to be used by manual lifting and short distance movements, for example within a workshop or working place.

The moving of gas bottles in these cases can take place in different ways. The bottles which are shaped as circular cylinders may be tilted and rolled on the edge around their bottom. They may also be moved by means of different kinds of transportation carts. The handling requirements due to security and other reasons, however, make it unsuitable or unallowed to roll the bottles when they are in a down-laying position. Also the above mentioned means of transportation are unsuitable, risky or bring with them difficulties, for example when passing thresholds and staircases and from an ergonomic point of view.

One means for lifting and moving gas bottles is described in US 3,960,398. The means, which comprises two members which are linked together, must be exactly adapted to the size of the gas bottle onto which it is to be used. The design of this device is also such that the surface of contact between the lifting device and the gas bottle will be very small and only comprise two short edges of the lifting device. This brings with it disadvantages both by a very high load on the device and the gas bottle in the contact surfaces and by the risk that the bottle due to its weight or some movement in connection with lifting and transportation will slip in the carrying device.

A lifting and carry device for gas bottles, poles and pillars and similar objects is disclosed in SE-B-464021. The means comprises two opposite gripping devices for gripping an object to be lifted. There are torque links turnably connected to a lower frame for displacement of the gripping devices. The links are also connected by a lifting member which is articulated at its centre where there is a connection for a lifter.

Document DE-A-1 756 613 discloses a lifting and carrying device having the features in the preamble of claim 1. The lifting device according to document DE-A-1 756 613 comprises two opposite gripping devices connected to a single parallelogram four-bar linkage, the gripping devices being provided with teeth.

The objective of the present invention is a lifting device for gas bottles and the like, by means of which these can be lifted and moved manually by one person only. A further object of the invention is a device which is flexible relative to the size of the bottles and which gives safe lifting thereby that the lifting force from the device is transferred to the gas bottle through a comparatively large contact surface so that the risk for slipping in the carrying device is eliminated.

The invention will below be described more in detail with reference to the example of an embodiment which is shown in the enclosed figures.

Figure 1 shows a lifting device according to the invention.

Figure 2 shows a lifting device according to the invention applied to the upper part of a gas bottle.

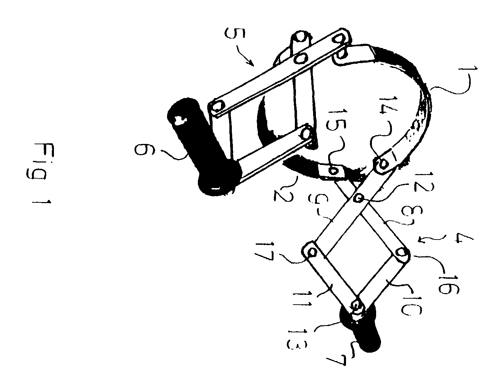

The device shown in figure 1 includes two gripping means 1, 2, which are connected to each other by two identical linking systems 4, 5. In the far end from the gripping devices of the linking system there are two handles 6, 7. The link system which comprises parallelogram four-bar linkage so arranged that the gripping devices 1, 2 are displaced parallel relative to each other when the handles 6, 7 are moved in a direction at right angle to a plane through the gripping devices, i.e. the handles in practice are moved upwards or downwards in order to open respectively close the gripping device. Each linkage system has two lower link arms 8, 9 and two upper link arms 10, 11. The lower link members are movably connected to either of the two gripping devices by means of movable pivot links constituted by pins 14, 15. The lower links are also movably connected to each other at a pivot 12 and with the upper link members 10, 11 at pivots 16, 17. The upper link members 10, 11 are further movably connected to each other at a pivot 13 which suitably is the outer end of a shaft which includes the handle 7.

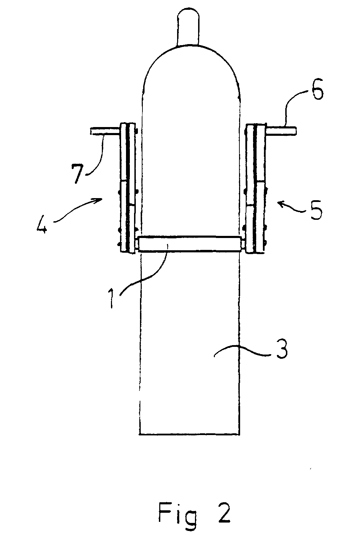

In use the device is applied to a gas bottle 3 as shown in figure 2. The gripping devices are positioned at a suitable height for lifting and moving the gas bottle. When the handles 6, 7 are moved upwards, the gripping devices 1, 2 are actuated by the linking system and moved towards each other.

The gripping devices, which are suitably made from steel bands having a friction increasing surface coating, have some flexibility and adapt to the shape of a gas bottle. Thereby that the gripping deyices by individual links 14, 15 are connected into a parallelogram four-bar linkage they clamp the bottle so that the largest possible contact surface is obtained instead of taking an angular position and pressing an edge onto the bottle. When the upwards movement of the handles continues, the gripping devices press stronger against the bottle and safe grip without risk for slipping is obtained. Clamped in this way the gas bottle can now be lifted and moved by one person.

It is essential that the handles when lifting are at a correct distance above the gripping devices and the parallelogram four-bar linkage should be designed with this in mind. The object to be lifted shall be possible to support with the body of the person who is lifting. If the distance between the gripping device and the handles is too long or too short, there is an increased risk that the lifted object will tilt to the side, either because the lever arm between the handles and the gripping device is too short or because the gripping devices will be positioned too far down on the object. The distance between a line through the two handles and a plane through the middle of the gripping devices should be 150 - 400 mm, preferably about 250 mm.

In exceptional cases at very heavy gas bottles and other objects two persons may use the device together. In such cases a slanted or uneven distribution of the lifting force onto the two handles may occur, which, however, does not mean any risk that the gas bottle will slip in the gripping device, as the design thereof ensures that sufficient friction is always present between the gripping device and the gas bottle.

Within the frame of the inventive idea the embodiment of the invention may be varied in different ways. The gripping devices which in the example above are made from steel bands can be given different kinds of surface coating, for example by rubber, polyethylene or the like. In embodiments without any surface coating the surface may be knurled or treated in any other way. The steel bands may be substituted for by chains or wires of corresponding length. Also the linkage system can be designed in different ways as to the relative length of the links of each system and position of the pivots, especially the pivot 12 which connects the two lower links. Further one more link may be added which can extend from the upper connecting point 13 of the two upper links and at its other end carry the handles. The gripping devices can also have different means to support or control the objects which shall be lifted and moved.

## Claims

1. Lifting and carrying device for gas bottles and the like objects (3) in a vertical position, comprising two opposite gripping devices (1, 2) for gripping the object (3) **characterised in that** the two opposite gripping devices (1, 2) are connected to each other by two parallelogram four-bar linkage devices (4) for displacement of the gripping devices, that handles (6, 7) are mounted on the four-bar linkage devices (4) in such a way that when they are actuated by a lifting force the gripping devices are moved towards each other and that the gripping devices are flexible so that they adapt to the shape of the object which shall be lifted.

2. Device according to any of the preceding claims, characterized therein, that the distance between the handles (6, 7) and the gripping device is 150 - 400 mm, preferably about 250 mm.

## Patentansprüche

1. Hebe- und Stützvorrichtung für Gasflaschen und ähnliche Gegenstände (3) in einer senkrechten Lage, zwei gegenüberliegende Greifvorrichtungen (1, 2) zum Greifen des Gegenstandes umfassend (3), **dadurch gekennzeichnet, dass** die beiden gegenüberliegenden Greifvorrichtungen (1, 2) mittels zweier vierteiliger Parallelogrammgestänge (4) zum Bewegen der Greifvorrichtungen mit einander verbunden sind, dass die Handgriffe (6, 7) an den beiden vierteiligen Parallelogrammgestängen (4) so montiert sind, dass die Greifvorrichtungen in Richtung zu einander bewegt werden, wenn sie von einer hebenden Kraft in Gang gebracht werden, und dass die Greifvorrichtungen flexibel sind, so dass sie sich an die Form des zu hebenden Gegenstandes anpassen.

2. Vorrichtung nach einem der vorgenannten Ansprüche, **dadurch gekennzeichnet, dass** der Abstand zwischen den Griffen (6, 7) und der Greifvorrichtung 150 - 400 mm, vorzugsweise etwa 250 mm, ist.

## Revendications

1. Dispositif de soulèvement et de portage de bouteilles de gaz et d'objets (3) analogues en une position verticale, comportant deux dispositifs (1, 2) de serrage en opposition pour serrer l'objet (3) **caractérisé en ce que** les deux dispositifs (1, 2) de serrage en opposition sont connectés l'un à l'autre par deux dispositifs (4) articulés à quatre barres en parallélogramme pour déplacer les dispositifs de serrage, **en ce que** des poignées (6, 7) sont montées sur les dispositifs (4) articulés à quatre barres de telle manière que lorsqu'elles sont actionnées par une force de soulèvement les dispositifs de serrage sont déplacés en direction l'un de l'autre et **en ce que** les dispositifs de serrage sont flexibles de sorte qu'ils s'adaptent à la forme de l'objet qu'ils doivent soulever.

2. Dispositif suivant l'une quelconque des revendications précédentes, **caractérisé en ce que** la distance entre les poignées (6, 7) et le dispositif de serrage est de 150 à 400 mm, de préférence environ 250 mm.
